Europäisches Patentamt

European Patent Office

Office européen des brevets

(19)

(11) Veröffentlichungsnummer: **0 222 177**
**B1**

(12) **EUROPÄISCHE PATENTSCHRIFT**

(45) Veröffentlichungstag der Patentschrift: **23.01.91**

(51) Int. Cl.⁵: **G 11 B 15/66**

(21) Anmeldenummer: **86114084.6**

(22) Anmeldetag: **10.10.86**

(54) **Blockagevorrichtung für die Nabe einer Bandspule auf einer rotierenden Welle.**

(30) Priorität: **11.10.85 IT 2244885**

(43) Veröffentlichungstag der Anmeldung:
**20.05.87 Patentblatt 87/21**

(45) Bekanntmachung des Hinweises auf die
Patenterteilung:
**23.01.91 Patentblatt 91/04**

(84) Benannte Vertragsstaaten:
**AT BE CH DE ES FR GB LI**

(56) Entgegenhaltungen:
**EP-A-0 026 964**
**DE-A-2 064 362**
**DE-A-2 829 824**
**DE-B-2 400 618**
**US-A-3 140 061**

(73) Patentinhaber: **ROBOTECNICA S.r.l.**
**Via Clerici, 2/4**
**20099 Sesto San Giovani (MI) (IT)**

(72) Erfinder: **Bosco, Angelo**
**Via Kennedy, 27**
**I-20097 San Donato Milanese (IT)**
Erfinder: **Magnaghi, Edgardo**
**Via Veneto 11/3b San Bovio**
**I-20068 Peschiera Borromeo (IT)**

(74) Vertreter: **Vogl, Leo, Dipl.-Ing.**
**AEG Aktiengesellschaft Patent-und**
**Lizenzwesen Theodor-Stern-Kai 1**
**D-6000 Frankfurt am Main 70 (DE)**

Courier Press, Leamington Spa, England.

**Beschreibung**

Die vor liegende Erfindung betrifft eine Blockagevorrichtung für die Nabe einer Bandspule auf einer rotierenden Welle.

Bei Maschinen, die große Spulen verwenden, und die aus einem auf eine zentrale Nabe aufgewickelten Magnetband bestehen, besteht die Notwendigkeit, die Spule selbst so anzubringen, daß sie auch bei starken Rotationsgeschwindigkeiten und bei wiederholten Beschleunigungen und Abbremsungen fest sitzt, zum Beispiel für die kontinuierliche Beschickung von automatischen Maschinen zum Laden des Magnetbands in Kassetten.

Bekannte Blockagevorrichtungen benutzen zum Beispiel eine Reihe elastischer Kugeln, die so in Kontakt mit der Spulennabe gebracht werden, daß sie durch ihre wenigstens teilweise komplementäre Stellungen gehalten wird.

In diesem Fall jedoch neigt die Spule oder besser gesagt die Spulennabe bei größerer Belastung dazu, aus der Vorrichtung herauszuspringen, was zum Produktionsstop und eventuell zu Materialbeschädigung führt.

Bei anderen Vorrichtungen benutzt man Ringelemente aus Plastik, eine Art Gummi, die teilweise plastisch sind und einen leichten Druck auf die Nabe ausüben können, was zum Blockieren führt, jedoch auch in diesem Fall mit geringer Sicherheit und Wahrscheinlichkeit des Harausspringens.

Aus der DE—A—2064362 ist eine Blockage-Vorrichtung für eine Bandspulennabe auf einer rotierenden Welle bekannt, bei der Führunghebel von Bremsbacken oder Arbeitselementen durch eine Ringfeder an eine bewegliche Ausgleichsglocke angedrückt werden und an ihr entlaggleiten.

Aus der Druckschrift EP—A1—0026964 ist weiterhin eine Blockage-Vorrichtung bekannt, bei der Arbeitselemente, die aus Plastik bestehen, durch Hebel bewegbar sind, die unterhalb einer Stützbasis verbolzt sind.

Aufgabe der vorliegenden Erfindung ist es, den Stand der Technik zu verbessern, indem eine Blockage-Vorrichtung für eine Spulennabe auf einer rotierenden Welle realisiert wird, die einen sicheren Sitz gewährleistet und kein zufälliges Herausspringen der Spule erlaubt.

Aufgabe der Erfindung ist es weiterhin alle scharfen Kanten, Hebel oder ähnliches zu eliminieren, die bei hohen Geschwindigkeiten höchst gefährlich sind.

Gemäß der vorliegenden Erfindung wird dies dadurch erreicht, daß eine Blockage-Vorrichtung für die Bandspulennabe auf einer rotierenden Welle realisiert wird, die auf einem Zentralkörper eine der Nabe und Welle gemeinsame Stützbasis aufweist, sowie Mittel zur Blockage der Nabe in Bezug auf die Stützbasis, die aus mindestens drei Arbeitselementen aus Plastik bestehen, die gemeinsam aus dem Äußeren eines Zentralkörpers aus drei Hebeln hervortreten, die an einem Ende mit besagtem Zentralkörper verbolzt sind und mittels äußerer Steuerungsmechanismen, die auf eines ihrer Enden einwirken, zum Kippen bewegbar sind, wobei die Verbolzungen unter der besagten Stützbasis liegen, so daß die drei Arbeitselemente in geneigter Stellung stehen, sobald sie in Kontakt mit der inneren Oberfläche der Nabe kommen, wobei die äußeren Steuerungsmechanismen Rollen aufweisen, die an besagtem Zentralkörper angebracht sind, und die besagten Hebel an ihrem anderen Ende eine geneigte Oberfläche, auf der die Rollen laufen und eine Einwölbung, die die Rollen aufnimmt um die Hebel in einer geneigten Stellung zu halten, aufweisen.

Eine Blockagevorrichtung nach der vorliegenden Erfindung ist an Hand der beiliegenden Zeichnung nachfolgend beschrieben:

Fig. 1 ist ein Ausschnitt einer Ansicht einer aufgestellten Blockagevorrichtung gemäß der Erfindung nach der Linie I—I in Fig. 2;

Fig. 2 ist ein Schnitt gemäß der Linie II—II in Fig. 1;

Fig. 3 ist ein Schnitt nach der Linie III—III in Fig. 1;

Fig. 4 ist ein Schnitt wie in Fig. 1 in einer anderen Arbeitsposition und nach der Linie IV—IV in Fig. 2.

In der Zeichnung ist die Blockagevorrichtung nach vorliegender Erfindung als Einheit 10 dargestellt, die drehbar in einer Öffnung 11 eines Gehäuses 12 liegt, das durch Schrauben 13 und einen Flansch 14 steif verbunden ist, der mit einer Motorwelle 16 drehbar verzahnt ist und auf einem äußeren Teil des Gehäuses 12 gehalten wird. Die Schrauben 13 verbinden den Flansch 14 fest mit der rotierenden Welle, die zu einem darunterliegenden Zentralteil 17 des Körpers der Vorrichtung führt, von dem sich radial eion ringförmiges Teil erstreckt, in das eine Basis 19 mit bestimmten Profil gearbeitet ist, die das Stützelement für die Nabe 20 einer Magnetbandspule 21 darstellt.

Radial stehen von dieser profilierten Basis 19 eine Reihe von drei Dornen 22 ab, die sich an den diesbezüglichen Stellen 23 der Nabe 20 anordnen und bewirken, daß sie zusammen mit der Vorrichtung 10 rotieren.

Vom Zentralteil erstreckt sich ein nach oben umlaufender zylindrischer hohler Teil 24, der an der seitlichen Oberfläche drei Führungsschlitze 25 aufweist, die so geformt sind, daß sie die Rollen aufnehmen können, die von paarweisen Führungen 27 gehalten werden, sowie von Bolzen 28, die sich radial von einem Körper 29 eines Knopfes oder äußeren Steuerteils 30 nach Außen erstrecken. Der Körper 29 läuft auf einer zylindrischen Welle, die in einer Bohrung 56 des Zentralteils 17 des Körpers mit seiner Achse gelagert ist, die als Zentrierelement für den axialen Lauf während der Betätigung des Knopfes 30 fungiert.

Der Körper 29 kann axial laufen und wird daran gehindert, im Innern des Zylindrischen Teils 24 zu rotieren, da zwischen den zwei Elementen 24—29 eine Spiralfeder angeordnet ist.

Unter dem Zentralteil 17 des Vorrichtungskörpers sind drei Stellen 32 angeordnet, die die unteren Enden 33 der drei Hebel 34, die "C"-Profil haben, aufnehmen, und zwar mit der offenen Seite der Schse des Zentralkörpers zugewandt, sie machen ihn durch Bolzen 35 äußerst beweglich, während in einer an der Unterseite des Zentralkörpers 17 eingelassenen Zone 36 eine weitere Spiralfeder 37 liegt, die zwischen dieser kreisförmigen Mulde des Bodens 38 dieser besagten eingelassenen Zone 36, und radialen Ausläufern der Enden 39 der drei Hebel 34 so wirkt, daß sie in Ruhestellung auf die Achse des Koïpers ausgerichtet sind. An den Zentralteilen 40 der Hebel 34 liegen an den Stellen 41 Arbeitselemente 42 aus im Wesentlichen prismatischem Plastik. Sowhol die Zentralteile 40 als auch die Arbeitselemente 42 sind beweglich und können die seitlichen Schlitze 43 des ringförmigen Teils 18 des Vorrichtungskörpers passieren.

Die Hebel 34 weisen an ihrem oberen Teil 44 eine geneigte Oberfläche 45 und Einwölbungen auf, die dem Laufen und stabilen Sitz der Rollen 26 der äußeren Steuerung 30 dient. Über dem ringförmigen Teil 18 des Körpers erstrecken sich ringförmige gewölbte Elemente 47, die Löcher 48 aufweisen, in denen Blockierschauben 49 eines glockenförmigen Hohlkörpers 50 angebracht sind, oben und in der Mitte mit Löchern 51, als Abdeckung des Körpers der Blockagevorrichtung.

Seitlich und in Korrespondenz mit den Zentralteilen 40 der Hebel 34 weist der glockenförmige Hohlkörper 50 öffnungen 52 auf, die den Ausgang der Arbeitselemente 42 zur Nabe·20 der Spule hin darstellen.

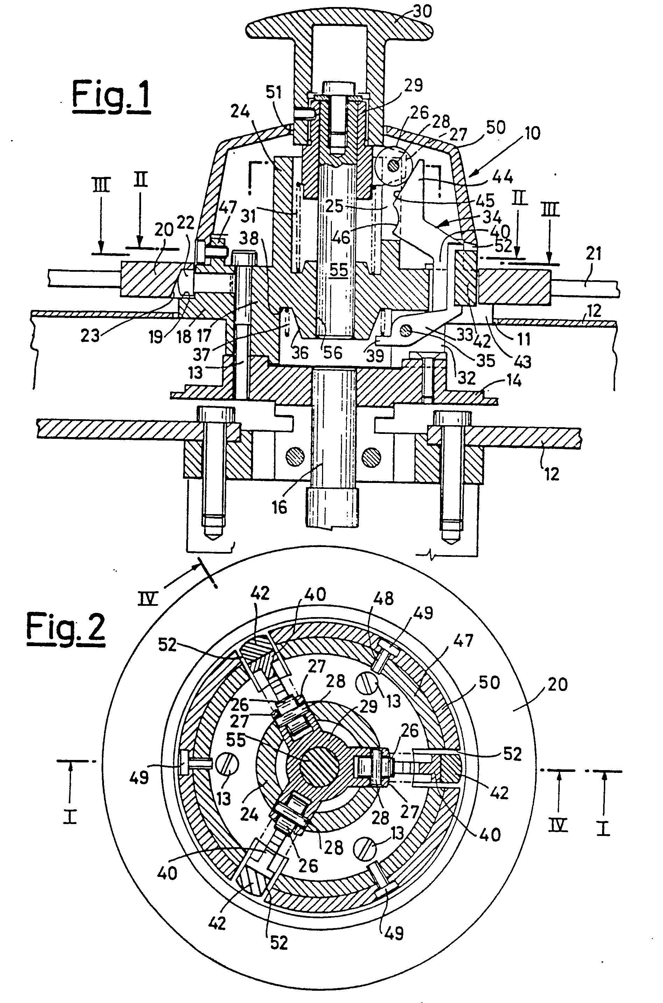

Sowohl die Hebel 34, als auch die Rollen 26, und alle diesbezüglichen Sitze und Einwölbungen findet man jeweils dreifach um 120° zueinander versetzt, sodaß sie in ihren Aktionen uniform arbeiten können. Wie in Abb. 1 gezeigt, wird die Nabe 20 einer Magnetbandspule 21 auf einer Haltevorrichtung 10 so angebracht, daß ihr Sitz 23 der Nabe 20 in Korrespondenz zu den diesbezüglichen Stiften 22 steht.

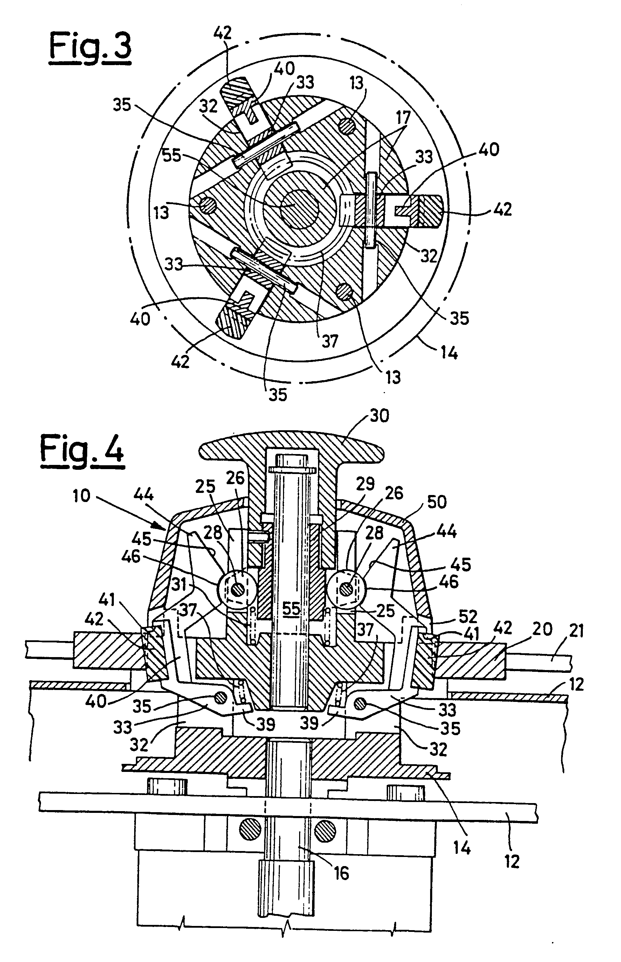

Bei Betätigung des Druckknopf 30 drückt er, wie in Abb. 4 gezeigt, nach unten, sodaß die Rollen 26 auf der Oberfläche 45 laufen, die Hebel 34 auseinanderdrücken, bis sie in stabiler heruntergelassener Lage zur Ruhe kommen. Die Drehbarkeit der Hebel 34 um die Bolzen 35 bewirkt das Andrücken der Arbeitselemente 42, die aus Gummileisten bestehen, an die innere Wand der Spulennabe 20. Wie man aus Abb. 4 ersehen kann, sind die Oberflächen der Arbeitselemente 42 in Bezug auf die innere Oberfläche der Nabe 20 so geneigt, daß auf jeden Fall auch bei Belastungen ein Herausfallen verhindert wird.

Außerdem ergibt sich, daß der Druck der Arbeitselemente 42 auch die Zentrierung und Selbsteinstellung der Spule in Bezug auf die Blockagevorrichtung so garantiert, daß sie korrekt die Rotation für das Auf- und Abspulen des Bandes bewerkstelligt.

Eine Blockagevorrichtung nach der vorliegenden Erfindung kann vorteilhaft bei automatischen Maschinen zum Laden von Magnetband auf Kassette angewandt werden, besagtes Band kann auf Spulen größeren Ausmaßes gespult sein, die ein Vielfaches der Länge des Bandes beträgt, das zur Füllung einer Kassette notwendig ist.

## Patentansprüche

1. Blockage-Vorrichtung (10) für die Bandspulnabe (20) auf einer rotierenden Welle (16), die auf einem Zentralkörper (17) eine der Nabe (20) und Welle (16) gemeinsame Stützbasis (19) aufweist, sowie Mittel zur Blockage der Nabe (20) in Bezug auf die Stüzbasis (19), die aus mindestens drei Arbeitselementen bestehen, die gemeinsam aus dem Äußern eines Zentralkörpers (17) aus drei Hebeln (34) hervortreten, die an einem Ende (33) mit besagtem Zentralkörper (17) verbolzt sind und mittels äußerer Steuerungsmerchanismen, die auf eines (44) ihrer Enden einwirken, zum Kippen bewegbar sind, so daß die drei Arbeitselemente (42) in geneigter Stellung stehen, sobald sie in Kontakt mit der inneren Oberfläche der Nabe (20) kommen, dadurch gekennzeichnet, daß die Arbeitselemente (42) aus Plastik bestehen und mit den besagten Hebeln (34) unterhalb der Stützbasis (19) verbolzt sind und daß die äußeren Steuerungsmechanismen Rollen (26) aufweisen, die an besagtem Zentralkörper (17) angebracht sind, und daß die besagten Hebel (34) an ihrem anderen Ende (44) eine geneigte Oberfläche (45), auf der die Rollen (26) laufen und eine Einwölbung, (46), die die Rollen (26) aufnimmt um die Hebel in einer geneigten Stellung zu halten, aufweisen.

2. Blockage-Vorrichtung nach Anspruch 1, dadurch gekennzeichnet, daß die Rollen (26) am Zentralkörper (17) radial hervortretend angebracht sind.

3. Blockagevorrichtung (10) gemäß Anspruch 1 oder 2, dadurch gekennzeichnet, daß die drei Hebel (34) im Wesentlichen "C"-Profil haben, mit der offenen Seite dem Zentralkörper zugewandt sind, und daß zwischen Ausläufern (39) der verbolzten Enden und dem Zentralkörper elastische Mittel vorgesehen sind.

4. Blockagevorrichtung (10) gemäß Anspruch 1 oder folgender, dadurch gekennzeichnet, daß der Zentralkörper (17) auf seiner Oberseite eine zylindrische Welle (55) aufweist, auf der axial geführte äußere Steuerungsmittel (29, 30) laufen, außerdem ein glockenförmiger Hohlkörper (50) als Abdeckung für den Zentralkörper (17) vorgesehen ist, der an seiner Oberseite eine Öffnung für das Passieren der Steuerungsmechanismen aufweist, und auch seitliche Öffnungen (52) besitzt, die in Verbindung zu den drei Arbeitselementen (42) stehen.

5. Blockagevorrichtung gemäß Anspruch 2 oder folgender, dadurch gekennzeichnet, daß besagte drei Steuerungsrollen (26) für das Kippen der drei Hebel (34) radial herausragend angeordnet sind und drehbar auf einem zentralen Druckknopf (30) gehalten werden, und daß wenigstens ein elastisches Element (31) zwischen besagtem Zentralkörper (17) und den Mitteln (29) zur Steuerung liegt.

## Revendications

1. Dispositif de blocage (10) servant à bloquer le moyeu (20) d'une bobine de bande sur un arbre rotatif (16) qui présente, sur un corps central (17) une embase d'appui (19) commune au moyeu (20) et à l'arbre (16), ainsi que des moyens permettant de bloquer le moyeu (20) par rapport à l'embase d'appui (19), qui sont composés d'au moins trois éléments travaillants qui émergent tous de la surface extérieure d'un corps central (17) en faisant saillie sur trois leviers (34) qui sont articulés à une extrémité (33) sur ledit corps central (17) et qu'on peut faire basculer à l'aide de mécanismes de commande extérieurs qui agissent sur une (44) de leurs extrémités, de sorte que les trois éléments travaillants (42) sont placés dans une position inclinée dès qu'ils entrent en contact avec la surface intérieure du moyeu (20), caractérisé en ce que les éléments travaillants (42) sont composés d'une matière plastique et sont articulés avec lesdits leviers (34) au-dessous de l'embase d'appui (10) et en ce que les mécanismes de commande extérieurs présentent des galets (26) qui sont montées sur ledit corps central (17) et en ce que lesdits leviers (34) présentent à leur autre extrémité (44) une surface inclinée (45) sur laquelle les galets roulent, et une encoche (46) qui reçoit les galets (26) pour maintenir les leviers (34) dans une position inclinée.

2. Dispositif de blocage selon la revendication 1, caractérisé en ce que les galets (26) sont montés sur le corps central (17) de façon à émerger radialement de a surface de ce corps.

3. Dispositif de blocage (10) selon la revendication 1 ou 2, caractérisé en ce que les trois leviers (34) ont un profil sensiblement en "C", dirigent leur côté ouvert vers le corps central (17), et en ce qu'il est prévu des moyens élastiques entre les prolongements (39) des extrémités articulées (33) et le corps central.

4. Dispositif de blocage (10) selon la revendication 1 ou une des revendications suivantes, caractérisé en ce que le corps central (17) présente sur son côté supérieur une tige cylindrique (55) sur laquelle coulissent des moyens de commande (29, 30) guidés axialement, et il est prévu en outre un corps le corps central (17), et qui présente, dans son côté supérieur, une ouverture pour le passage des mécanismes de commande, et présente aussi des ouvertures latérales (52) placées au droit des trois éléments travaillants (42).

5. Dispositif de blocage selon la revendication 2 ou l'une des revendications suivantes, caractérisé en ce que les trois galets de commande (26) servant à faire basculer les trois leviers (34) sont disposés en saillie radiale et sont montés rotatifs sur un bouton poussoir central (30) et en ce qu'au moins un élément élastique (31) est prévu entre edit corps central (17) et les moyens de commande (29).

## Claims

1. Blocking device (10) for the tape reel hub (20) on a rotating shaft (16), which on a central body (17) displays a support base (19) common to the hub (20) and the shaft (16) as well as means for the blocking of the hub (20) with respect to the support base (19), which consist of at least three operative elements (42), which issue together from the exterior of a central body (17) of three levers (34), which are bolted at one end (33) to said central body (17) and movable for tilting by means of external control mechanisms which act on one (44) of their ends so that the three operative elements (42) stand in inclined setting as soon as they come into contact with the inward surface of the hub (20), characterised thereby, that the operative elements (42) consist of plastics material and are bolted to the said levers (34) underneath the support base (19) and that the external control mechanisms display rollers (26), which are mounted at said central body (17) and that the said levers (34) at their other end (44) display an inclined surface (45), on which the rollers (26) run, and a concavity (46), which receives the rollers (26) in order to retain the levers (34) in an inclined setting.

2. Blocking device (10) according to claim 1, characterised thereby, that the rollers (26) are mounted at the central body (17) to protrude radially.

3. Blocking device (10) according to claim 1 or 2, characterised thereby, that the three layers (34) are substantially of C-profile with the open side facing the central body (17) and that elastic means are provided between the arms (39) of the bolted ends (33) and the central body.

4. Blocking device (10) according to claim 1 or the following, characterised thereby, that the central body (17) at its upper side displays a cylindrical shaft (55), on which axially guided external control means (29, 30) run, and a bell-shaped hollow body (50) is provided beyond that as cover for the central body (17), which at its upper side displays an opening for the passage of the control mechanisms and also possesses lateral openings (52), which stand in connection with the three operative elements (42).

5. Blocking device (10) according to claim 2 or the following, characterised thereby, that said three control rollers (26) are arranged to protrude radially outwards for the tilting of the three levers (34) and retained to be rotatable on a central pushbutton (30) and that at least one elastic element (31) lies between said central body (17) and the means (29) for control.

# Fig.1

# Fig.2

Fig.3

Fig.4